# EUROPEAN PATENT APPLICATION

(11) **EP 1 808 629 A2**
(43) Date of publication of application: **18.07.2007**
(21) Application number: 06077028.6
(22) Date of filing: 15.11.2006
(51) Int. Cl.: F16L 3/10

(54) **Cable clamp device with engageable/disengageable locking part**

(30) Priority: 15.12.2005 IT MI20052396
(71) Applicant: MBM Elettronica S.r.L., 35127 Padova (IT)
(72) Inventor: Pizzi, Giordano, 20144 Milano (IT)
(74) Representative: Raimondi, Margherita

(57) **Abstract**

Cable clamp device comprising a body (10) through which a seat (11) for containing a cable (1) is formed, said seat (11) having at least one side provided with a vertical guiding seat (12) on the bottom surface (12a) of which a set of teeth (12b) able to engage with a corresponding set of side teeth (14b) of a wedge part (20;120) is formed, characterized in that said seat (11) is open in the vertical direction (Z-Z) and said body (10) has a second vertical seat (14) with a suitable cross-section able to co-operate with an associated extension (24) of the head (23) of the wedge (20;120) having a corresponding cross-section so as to produce a reaction to the forces exerted on the wedge in the transverse direction (Y-Y).

## Description

The present invention relates to a cable clamp device.

It is known in the technical sector relating to the assembly of electric cables that difficulties exist as regards the need to keep to keep said cables firmly fixed once they have been mounted on the corresponding electrical apparatus such as electric household appliances and the like.

It is also known that, for this purpose, retaining parts, commonly called cable clamps, are used, these having a body with an external shape suitable for engagement with the corresponding seat in the apparatus and an axial through-hole inside which the cable is inserted and then held in position by means of a movable bridge which is fixed by one or more screws screwed to the body of the cable clamp.

Although performing their function, these cable holders nevertheless have some practical drawbacks arising from the presence of the screws which, in addition to forming an additional component of the entire assembly, with their own cost, result in the need for subsequent mounting during production, with an obvious increase in labour costs.

In addition to this, the screws are subject both to the regulations regarding tightening torque, which corresponds to the diameter of the said screws, and to unscrewing produced by the vibrations of the electric household appliance which result, with time, in the risk of the cable coming loose.

IT 1,317,965 also describes a cable sleeve which has a hole passed through by a transverse opening inside which a wedge is inserted so as to make contact with the cable and hold it in position.

Although performing its function, this cable sleeve has drawbacks arising from the fact that the seat of the cable consists of a hole which does not facilitate insertion of the cable in particular in the case of large diameters; in addition to this, the reaction of the cable against the wedge at the moment of mutual contact tends to cause rotation of the said wedge which jams, making further clamping and/or removal thereof difficult.

The technical problem which is posed, therefore, is that of providing a cable clamp for the assembly of electric cables, which allows more rapid and low-cost production thereof and results in more stable fixing of the cable without jamming and without the need for tightening of screws, resulting in mounting in an easy and repeatable manner.

In connection with this problem a further requirement is that the cable clamp should allow a reduction in the overall quantity of material necessary for manufacture thereof.

These results are obtained according to the present invention by a cable clamp according to the characteristic features of Claim 1.

Further details may be obtained from the following description of a non-limiting example of embodiment of the subject of the present invention provided with reference to the accompanying drawings in which:
Figure 1 shows a perspective view of the cable clamp according to the present invention;
Figure 2 shows a cross-section along the plane indicated by II-II in Fig. 3;
Figure 3 shows a cross-section along the plane indicated by III-III in Fig. 2;
Figure 4 shows a cross-section along the plane indicated by IV-IV in Fig. 3;
Figure 5 shows a cross-section along the plane indicated by V-V in Fig. 3;
Figure 6 shows a cross-section, similar to that of Fig. 2, of a second embodiment of the cable clamp according to the present invention;
Figure 7 shows a partial perspective view of a cable clamp according to the present invention incorporated in an electrical terminal box;
Figure 8 shows a perspective view of a further embodiment of the cable clamp according to the present invention;
Figure 9 shows a schematic cross-section along a vertical plane of the cable clamp according to Fig. 8.

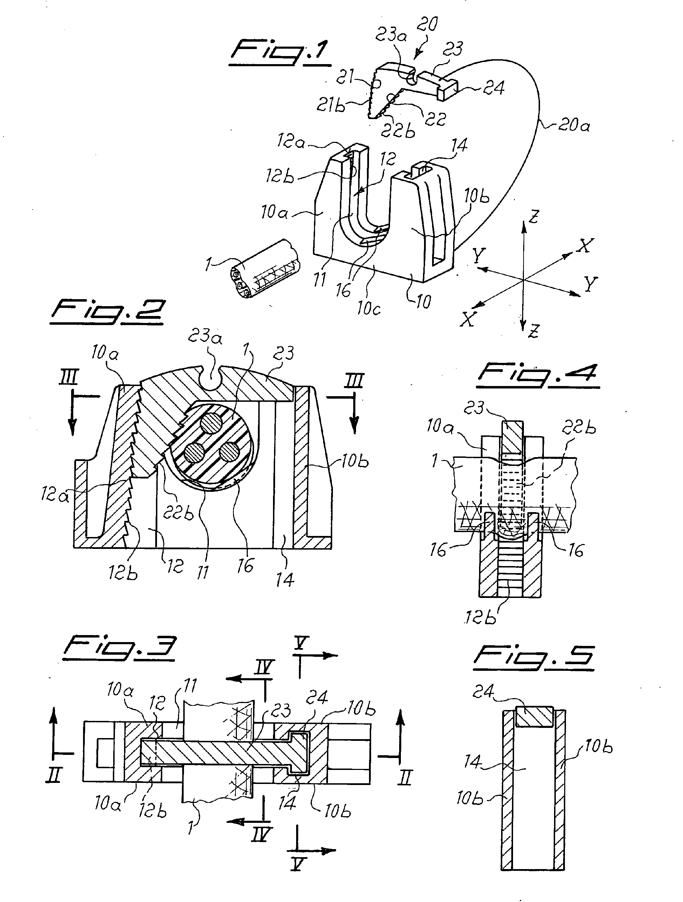

As shown in Fig. 1 and with reference to a set of three reference axes assumed solely for the sake of convenience of the description with a longitudinal axis X-X, transverse axis Y-Y and vertical axis Z-Z as per the layout of the figures, the cable clamp device according to the present invention comprises essentially a body 10 with uprights 10a and 10b connected by a transverse base 10c.

The body has a seat 11 which is open on the opposite side to the base 10c, resulting in a substantially U-shaped form of the cable clamp able to allow insertion, in the vertical direction Z-Z, of the cable 1 extending in the longitudinal direction X-X.

One of the two uprights of the "U", the upright 10a in the example of the figure, has in turn a seat 12 which extends in the vertical direction, is open towards the seat 11 housing the cable 1 and the bottom surface 12a of which has a sawtooth profile 12b.

The other upright 10b of the "U" has a seat 14 in turn extending in the vertical direction, open only at the top and having a cross-section preferably in the form of an "T".

According to a preferred embodiment of the cable clamp, the bottom of the "U" is also provided with two ribs 16 able to react with the cable 1, as will be explained below.

The body 10 of the cable clamp has, attached to it, by means of a cord 20a, a wedge-shaped part 20 which has a side wall 21 situated on the outside with respect to the position of the cable 1, inclined and with a sawtooth profile 21b corresponding to the sawtooth profile 12b of the seat 12.

The inner side 22 of the wedge has, in turn, a sawtooth profile 22b able to engage with the cable 1, as will emerge more clearly below.

In a preferred embodiment, the wedge 20 has a head 23 with, formed therein, a recessed seat 23a for operation by means of manual tool.

The head 23 is extended laterally by an extension 24 in the form of a "T" suitable for insertion inside the corresponding seat 14 of the upright of the "U", inside which it is able to slide in the vertical direction Z-Z, while preventing the movement of the wedge at least in the transverse direction Y-Y and/or in the longitudinal direction X-X.

With the configuration described above, operation of the cable clamp is as follows:
- firstly the cable 1 is inserted inside the seat 11;
- the wedge 20 is introduced into the said seat, causing the head 24 to enter into the associated guide seat 14;
- this brings the sawteeth 21b of the outer side 21 into contact with the corresponding profile 12b of the vertical seat 12 and
- the sawteeth 22b come into contact with the cable 1;
- a subsequent further pushing force in the vertical direction, against the head 23 of the wedge 20, produces the following effects:
   - deformation of the cable 1 which is positioned along a corresponding longitudinal section inside the seat 16a formed by the said ribs 16 projecting inside the seat 11;
   - reaction of the cable 1 which pushes the wedge 20 against the part 12 of the upright 10a so that the respective teeth 12b and 21b engage with each other, causing clamping of the wedge;
   - reaction of the head 24 inside the vertical seat 14 which prevents rotation of the wedge, keeping it aligned and preventing jamming thereof which would prevent any subsequent further operations such as, for example, extraction of the wedge; said operation can be performed by applying to the head of the wedge a tool which, after being inserted inside the seat 12 and suitably manoeuvred, allows displacement of the wedge towards the axis Y-Y to be performed until mutual disengagement of the teeth 12b, 21b and therefore extraction of the wedge occur;
   - by performing a limited outward movement of the wedge it is also possible to free the cable for axial displacement thereof without having to extract the said wedge completely.

The above description highlights all the advantages of the cable clamp according to the invention compared to the prior art: with the cable clamp, in fact, it is possible to eliminate the clamping screw with all the consequent advantages of lower production and assembly costs, as well as a reduction in the overall dimensions of the cable clamp, which may consequently also be inserted inside seats with a smaller rear space.

In addition to this, the engagement between the two teeth is substantially unaffected by the vibrations, resulting in much more stable and reliable retention of the cable.

Figure 6 shows a variation of a first example of embodiment of the cable clamp according to the invention; in this configuration the clamping part 120 is of a dual nature and consists of two wedge parts 20 arranged opposite each other and fastened together by means of an elastic hinge 127.

The respective outer sides 21, 121 of the dual wedge have a respective set of teeth 21b, 121b able to engage with a corresponding set of teeth 12b, 112b of the associated walls 12, 114a of the vertical seats 12, 14. It is also envisaged that the surfaces of the inner sides 226 of the wedge 10, 120 may be smooth, this solution being particularly suitable for cables made of delicate material such as teflon and the like.

According to a further embodiment (not shown) it is envisaged that the surface of the inner side of the wedge is inclined with respect to the longitudinal direction so as to form an edge able to interact with the cable 1 so as to oppose extraction of the said cable in the axial direction.

Owing to the presence of a U-shaped seat and the guide head 24 it is possible, moreover, to insert and extract the cable into/from the said seat and manoeuvre the cable during insertion/extraction without difficulty owing to the increased stability and alignment.

Figure 7 shows an embodiment of the cable clamp device according to the present invention in which the said device is incorporated in the side 1a of an electric terminal box 1.

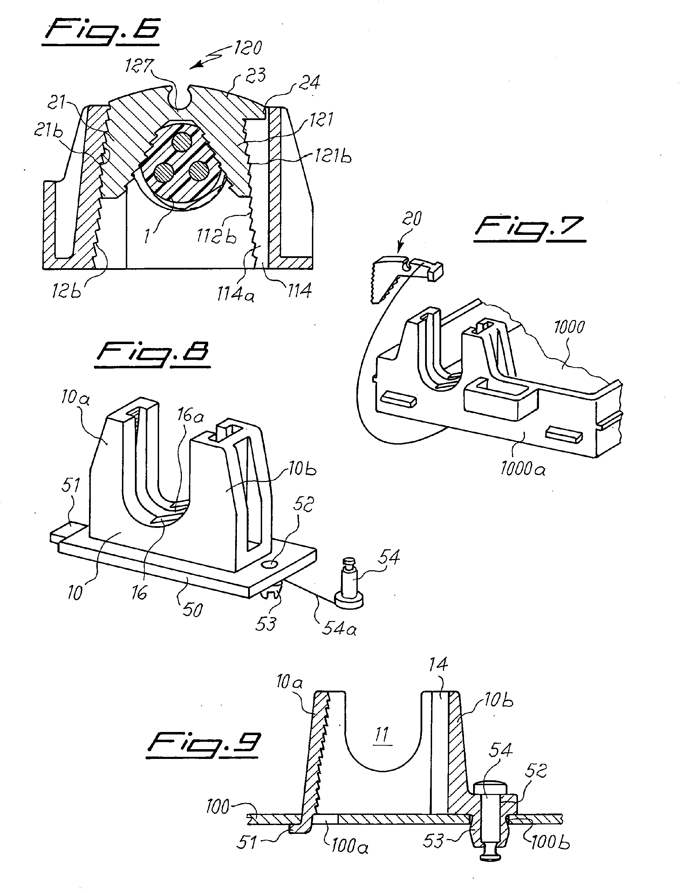

Figure 8 shows an embodiment of the cable clamp device according to the present invention in which the same device is incorporated in a base 50 provided with a tooth 51 projecting in the transverse direction from one of the longitudinal sides of the said base.

The base 50 also has, on the longitudinal side opposite to that of the tooth 51, an expansion plug 53 projecting at right angles towards the outside of the said base in the direction of the said base opposite to that of the cable clamp; the two opposite sides of the base are connected together by means of a through-hole 52 suitable for insertion of a pin 54.

In this way, once the cable clamp has been arranged with tooth 51 and expansion plug 53 inserted in respective holes 100a, 100b in a wall 100, insertion of the pin 54 in the expansion plug 53 causes stable locking of the cable clamp to the wall.

In a preferred embodiment the pin 54 is attached to the base 50 by means of a cord 54a and is formed as one piece with the said base during the moulding step.

Although not shown, it is also envisaged that the cable fixing device may be of the type with a passage for entry of the cable consisting of a through-hole inside which the said cable 1 is inserted; in this configuration the upper surface of the hole will be open over a certain arc so as to allow insertion of the wedge part, the other characteristic features already described remaining substantially unchanged.

## Claims

1. Cable clamp device comprising a body (10) through which a seat (11) for containing a cable (1) is formed, said seat (11) having at least one side provided with a vertical guiding seat (12) on the bottom surface (12a) of which a set of teeth (12b) able to engage with a corresponding set of side teeth (21b) of a wedge part (20;120) is formed, **characterized in that** said body (10) has a second vertical seat (14) with a suitable cross-section able to co-operate with an associated extension (24) of the head (23) of the wedge (20;120) having a corresponding cross-section so as to produce a reaction to the forces exerted on the wedge in the transverse direction (Y-Y).

2. Device according to Claim 1, **characterized in that** said body (10) has two uprights (10a,10b) connected by a transverse base (10c).

3. Device according to Claim 1, **characterized in that** said seat consists of a through-hole in which the said cable (1) is inserted.

4. Device according to Claim 1, **characterized in that** said seat (11) is open in the vertical direction (Z-Z).

5. Device according to Claim 1, **characterized in that** said seat (11) has an opening along the side opposite to the base (10c).

6. Device according to Claim 5, **characterized in that** said seat (11) has an overall substantially U-shaped form.

7. Device according to Claim 2, **characterized in that** at least one (10a) of the two uprights has a seat (12) extending in the vertical direction and open towards the seat (11) housing the cable (1).

8. Device according to Claim 2, **characterized in that** at least one (10b) of the two uprights has a seat (14) in turn extending in the vertical direction, open only at the top and with a T-shaped cross-section.

9. Device according to Claim 1, **characterized in that** the bottom of the seat (11) is provided with two ribs (16) able to define a partition (16a) and react with the cable (1).

10. Device according to Claim 1, **characterized in that** said wedge (20;120) is attached to the body (10) by means of a cord (20a).

11. Device according to Claim 1, **characterized in that** said wedge (10;120) has an asymmetrical structure with at least one side (21) situated on the outside with respect to the position of the cable (1), inclined and with a sawtooth profile (21b) corresponding to the sawtooth profile (12b) of the seat (12).

12. Device according to Claim 1, **characterized in that** said wedge (10;120) has at least one inner side (22) inclined and with a sawtooth profile (22b) able to engage with the cable (1).

13. Device according to Claim 10, **characterized in that** the inner side (22) has an inclination different from that of the outer side (21).

14. Device according to Claim 1, **characterized in that** the wedge (120) has a symmetrical structure with two outer sides (21;121) provided with a respective sawtooth profile (21b;121b).

15. Device according to Claim 13, **characterized in that** the body (10) has an upright (10b), opposite the second outer side (121), with a sawtooth profile (114b) corresponding to the second sawtooth profile (121b) of the symmetrical wedge (120).

16. Device according to Claim 13, **characterized in that** the head (123) of the symmetrical wedge has an internal elastic hinge (127).

17. Device according to Claim 1, **characterized in that** the inner sides of the wedge designed to make contact with the cable have a smooth surface.

18. Device according to Claim 1, **characterized in that** the inner sides of the wedge designed to make contact with the cable have a surface inclined with respect to the longitudinal direction so as to form an edge able to interact with the cable (1).

19. Device according to Claim 1, **characterized in that** it is incorporated in the base (50) provided with a tooth (51) projecting in the transverse direction from one of the longitudinal sides of the said base.

20. Device according to Claim 19, **characterized in that** said base (50) has an expansion plug (53) projecting at right angles towards the outside of the said base in the direction opposite to that of the cable clamp.

21. Device according to Claim 20, **characterized in that** said plug (53) is arranged along the longitudinal side opposite to that of the transverse tooth (51).

22. Device according to Claim 20, **characterized in that** the two opposite sides of the base are connected together by means of a through-hole (52) coaxial with the plug (53) and suitable for insertion of a pin (54).

23. Device according to Claim 22, **characterized in that** said pin (54) is attached to the base (50) by means of a cord (54a).

24. Device according to Claim 23, **characterized in that** said pin (54) is formed as one piece with the said base during the actual moulding step.

25. Electric terminal box comprising at least one cable clamp device (1) incorporated in one of its sides (1a), **characterized in that** said device has a seat (11) for containing a cable (1), said seat (11) having at least one side (10a) provided with a vertical guiding seat (12) on the bottom surface (12a) of which a set of teeth (12b) able to engage with a corresponding set of side teeth (14b) of a wedge part (20;120) is formed and **in that** said seat (11) is open in the vertical direction (Z-Z), said body (10) having a second vertical seat (14) with a suitable cross-section able to co-operate with an associated extension (24) of the head (23) of the wedge (20;120) having a corresponding cross-section so as to produce a reaction to the forces exerted on the wedge in the transverse direction (Y-Y).
